(19) Europäisches Patentamt
European Patent Office
Office européen des brevets

(11) **EP 1 040 883 A1**

(12) **EUROPEAN PATENT APPLICATION**

(43) Date of publication:
04.10.2000 Bulletin 2000/40

(51) Int. Cl.$^7$: **B22D 17/00**

(21) Application number: 00104480.9

(22) Date of filing: 09.03.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 31.03.1999 JP 9193299

(71) Applicant:
**Mazda Motor Corporation
Aki-gun, Hiroshima-ken 730-8670 (JP)**

(72) Inventors:
• **Sakamoto, Kazuo
Aki-gun, Hiroshima 730-8670 (JP)**
• **Yamamoto, Yukio
Aki-gun, Hiroshima 730-8670 (JP)**

(74) Representative:
**Müller-Boré & Partner
Patentanwälte
Grafinger Strasse 2
81671 München (DE)**

(54) **Light metal forging material manufacturing method and forged member manufacturing method using the material**

(57)    A high-quality forging material made of a light metal alloy having a small quantity of defects is provided by properly setting the casting conditions or injection molding conditions, and a sound forged member made of a light metal alloy having excellent strength characteristics is obtained by properly setting the forging conditions. Provided is a forging material to be used as a material subjected to a forging process for obtaining a forged member made of a light metal. The forging material is molded by a semi-solid injection molding method having a screw velocity of not smaller than 1 [m/s], and having a relative density of not lower than 90%. A molten material of a magnesium alloy is used as the light metal molten material.

*Fig.11*

**Description**

BACKGROUND OF THE INVENTION

The present invention relates to a forging material provided as a material to be subjected to a forging process for obtaining a forged member made of a light metal, a molding method and a molding apparatus of the material and a method for manufacturing the forged member obtained through the forging process using the material.

Conventionally, as a method for manufacturing a light metal member made of a light metal such as magnesium (occasionally represented by the symbol Mg for the element hereinafter), magnesium alloys, aluminum (occasionally represented by the symbol Al for the element hereinafter) and aluminum alloys, a method based on the casting method is most general. As a kind of this casting method, there has conventionally been well known the so-called die casting method for achieving an increase in speed of the casting process by injecting and charging a light metal molten material into a casting die at high pressure so as to allow the productivity to be remarkably improved.

There has also been known a semi-solid casting method for injecting and charging a light metal molten material in a semi-solid state (basically at a temperature lower than its melting point) into a casting die in contrast to the normal melt-casting method for injecting and charging a light metal molten material in a completely molten state at a temperature higher than its melting point into a casting die.

Furthermore, in recent years, a light metal member manufacturing method using an injection molding method is being put into practical use particularly for Mg and its alloys or the like. This method uses an injection molding apparatus and injects and charges a light metal molten material in the molten state from its injection nozzle into the molding cavity of a molding die. This method can efficiently manufacture a molded product (light metal member) in a cycle time shorter than that of the casting method. This injection molding method is also known as a process that is relatively clean and has a higher safety in terms of the working environment as compared with the casting method such as the die casting method while enabling the obtainment of a light metal molded product with high accuracy, homogeneity and little deficiency of shrinkage cavity or the like in terms of quality.

In connection with this injection molding method, there has also been known the so-called semi-solid injection molding method for injecting and charging a light metal molten material in a semi-solid state (basically at a temperature lower than its melting point) from an injection nozzle into a molding cavity (refer to, for example, the prior art reference of Japanese Patent Publication No. 2-15620).

Not only in the casting method but also in the injection molding method, since the molten material temperature (the term of "molten material" hereinafter also includes the semi-solid material that is not in the completely molten state) is relatively low when a semi-solid metal molten material is used, the so-called "burr" scarcely appears and being appropriate for injection at high speed and/or high pressure, also providing advantages for improving the productivity.

Furthermore, by putting the metal molten material into the semi-solid state and charging the same into the molding cavity, the molten material in which the unmolten solid phase portion is mixed in the completely molten liquid phase portion is charged as it is. Therefore, the metal molten material is charged in a state close to a laminar flow, as a consequence of which the involvement of gas is allowed to be relatively little for the obtainment of a structure of a relatively uniform quality. This can improve the mechanical characteristics of the obtained member as a whole.

It is to be noted that the term of "solid phase" means "the portion that is not molten but maintained in the solid state when the light metal molten material is in the semi-solid state", while the term of "liquid phase" means "the portion that is completely molten and put in the liquid state" in the present specification. The aforementioned "solid phase" can be easily distinguished as "the portion that has not been molten in the semi-solid metal molten material state but maintained in the solid state" from the portion in the liquid phase "that was completely molten in the semi-solid metal molten material state and put in the liquid state" by observing the solidified structure of the obtained light metal member. The term of "solid phase" used for the obtained member means the "portion that has not been molten in the semi-solid light metal molten material state but maintained in the solid state (has been solid phase)".

It is to be further noted that the term of "solid phase rate" means "the rate of the solid phase relative to the whole molten material (solid phase + liquid phase) in the semi-solid metal molten material" in the present specification. The above rate can be numerically obtained as the rate (area ratio) of the portion that has been in the "solid phase" relative to the whole observed region by observing the solidified structure of the molded product after the injection.

It is to be further noted that the term of "semi-solid state" used for the light metal molten material basically means" a state in which the raw material in the solid state (solid phase) and the raw material that is molten and put in the liquid state (liquid phase) are coexisting" in the present specification. That is a state obtained normally by heating the raw material below its melting point. It is to be assumed that the case where the solid phase rate is substantially equal to 0 (zero) percent when the temperature of the light metal molten material is substantially at the melting point or just over the melting point is also included in this "semi-solid state".

Even if the light metal molten material itself has a substantially zero percent solid phase rate, considering the practical injection molding process of, for example, the semi-solid injection molding method, then a solidified portion (the so-called cold plug) and a high-solid-phase portion having a high solid phase rate are generated at the nozzle tip side as a consequence of the cooling of the metal molten material inside the molten material feed path of the injection nozzle in an interval from the end of one injection (one shot) from the injection nozzle into the die to the execution of the next injection (next shot). Therefore, the light metal molten material to be actually injected into the molding cavity is to inevitably include the solid phase portion.

On the other hand, if it is required to obtain a light metal member of a higher strength than that of the aforementioned casting method or the injection molding method, the forging method is most generally adopted. Furthermore, as a kind of manufacturing method for manufacturing a light metal member by this forging method, there is known the so-called casting-forging method for forming a material (forging material) appropriate for the forging process by a casting method prior to the forging process, setting this material to a specified forging die and subjecting the material to a forging process, as disclosed in, for example, the prior art reference of Japanese Patent Laid-Open Publication No. 6-297127.

According to this casting-forging method, a semi-finished product having a shape relatively resembling the shape of the finished product (forged member) can be formed through the forging process in the casting (material) stage. This allows the forging process to be simplified into only one process of the forging for finishing and also allows a member of a complicated shape to be forged. Furthermore, the material structure can be adjusted so that even a material of an inferior forging property can be subjected to the forging process without a trouble.

It is to be noted that the forming of the forging material in this casting-forging method can be performed by the injection molding method instead of the casting method.

However, the casting process (forming process for forging material) of this casting-forging method sometimes involves a gas including air in a molten material charging stage or the like. If the solidification occurs in the state in which the gas is involved and internally existing, then there is remaining a gas defect inside the casting product. Particularly when a casting process capable of performing charging at high speed and high pressure such as die casting method is used for this forging material forming process, then the gas defect more easily occurs, and the problem becomes still more significant.

The defects such as gas defect and the so-called "shrinkage cavity" are very hard to be completely removed through the manufacturing process by only casting or injection molding. In particular, in the case of a thick member, the solidifying rate in the center portion becomes low, and the crystal grain diameter in the center portion and in the vicinity of the portion becomes large, resulting in a further difficulty in obtaining a sufficient strength.

In the case of the aforementioned semi-solid injection molding method, the defects such as gas defect and shrinkage cavity can be reduced generally by increasing the solid phase rate. However, it is also difficult to completely remove the defects in this case, and it is known that the strength becomes reduced as the solid phase rate becomes higher when the quantity of defects is same.

Therefore, it is not expectable to largely increase the member strength merely by setting a high solid phase rate.

As described above, it can be considered that the material (forging material) obtained through casting or injection molding inevitably includes a certain degree of defect. If the quantity of defects inside this material is large, the defect causes the occurrence of cracks in the forging stage. Therefore, the forging rate cannot be set so high, and the defect is hard to be completely removed by forging. Accordingly, it is unable to obtain sufficient effect of improving the strength of the member through forging. Particularly, in the case of the so-called unclosed forging die method according to which a forging space formed in the forging die is not completely closed and at least part of the forging material is not restrained by the forging die and is allowed to be freely plastically deformed, it is difficult to completely remove the defect through the forging process.

When subjecting a material obtained through casting or injection molding to a forging process, the defects remain inside the member unless the forging conditions are properly set although the quantity of defects that internally exist can be reduced to a certain extent regardless of the quantity of defects inside the material, also failing in obtaining the sufficient effect of improving the strength of the member.

SUMMARY OF THE INVENTION

The present invention has been made in view of the aforementioned problems and has the object of providing a high-quality forging material made of a light metal alloy having a small quantity of defects by properly setting the casting conditions or injection molding conditions and obtaining a sound forged member made of a light metal alloy having excellent strength characteristics by properly setting the forging conditions.

The inventors of the present application have conducted energetic researches in view of the aforementioned technical problems and discovered that, by setting the relative density (a value obtained by expressing in percent (%) the actual density relative to the theoretical density) not lower than a specified value in the material (forging material) stage, the relative density of the forged member obtained through the forging process using the material could be stably secured at a very high value, and that the relative density of the resulting molded product (forging material) could be effectively increased for the reduction in quantity of the defect by properly setting the factors of the gate cross-section area of the molding die, the velocity of the molten material flowing through the gate, the volume and maximum cross-section area of the molding cavity and so on in the case of semi-solid injection molding.

Accordingly, in the first aspect of the present invention, there is provided a forging material provided as a material to be subjected to a forging process for obtaining a forged member made of a light metal, the forging material being manufactured by a die casting method having a plunger velocity of not smaller than 1 [m/s] or an injection molding method having a screw velocity of not smaller than 1 [m/s], and having a relative density of not lower than 90%.

The reason why the plunger velocity of the die casting method and the screw velocity of the injection molding method have the lower limit of 1 [m/s] is that the cycle time in the manufacturing stage becomes too long to cause a lack of practicality if the lower limit is lower than this value, although the occurrence of gas defect due to the involvement of gas in the manufacturing stage of the forging material can be reduced. The reason why the lower limit value of the relative density of the forging material is set to 90% is that it is difficult to stably keep the relative density of the forged member obtained through the forging process using the forging material at a high value (not lower than 99%, for example) that seems to be practically preferable, if the relative density of the forging material is lower than this value by either the die casting method or the injection molding method (including the case where the semi-solid molten material is used as well as the case where a molten material in a completely molten state is used).

Further, according to the second aspect of the present invention based on the above aspect of the invention, the forging material being molded by a semi-solid injection molding method for injecting and charging a light metal molten material in a semi-solid state into a molding cavity and having a relative density of not lower than 90%.

The reason why the lower limit of the relative density of the forging material is set to 90% is that it is difficult to stably keep the relative density of the forged member obtained through the forging process using the material at a high value (not lower than 99%, for example) that seems to be practically preferable if the relative density of the forging material is lower than this value.

Further, according to the third aspect of the present invention based on the above aspect of the invention, a molten material of a magnesium alloy is used as the light metal molten material.

Furthermore, according to the fourth aspect of the present invention, there is provided a forging material molding method for molding a forging material by a semi-solid injection molding method for injecting and charging a light metal molten material in a semi-solid state into a molding cavity of a molding die when forming the forging material provided as a material to be subjected to a forging process for obtaining a forged member made of a light metal, the molding method being carried out by setting a ratio $Sg/Sw$ of a gate cross-section area $Sg$ to a molding cavity maximum cross-section area $Sw$ in a direction roughly perpendicular to an inflow direction of the molten material to a value of not smaller than 0.02, and setting a gate passage velocity $Vg$ of the molten material to a value of not greater than 150 [m/s].

The reason why the ratio $Sg/Sw$ of the gate cross-section area $Sg$ to the molding cavity maximum cross-section area $Sw$ is set to the value of not smaller than 0.02 is that a forging material having a relative density of not lower than 90% can be obtained when this value of ratio is not smaller than 0.02, even if the case where the solid phase rate is very low (particularly, in the completely molten state of a solid phase rate of 0%) is supposed. The reason why the upper limit value of the gate passage velocity $Vg$ of the molten material is set to 150 [m/s] is that the forging material having a relative density of not lower than 90% becomes hard to be stably obtained if the gate passage velocity $Vg$ of the molten material exceeds this value.

Furthermore, according to the fifth aspect of the present invention, based on the above aspect of the invention, the molding is carried out by setting the gate passage velocity $Vg$ of the molten material to a value of not greater than 100 [m/s].

The reason why the upper limit value of the gate passage velocity $Vg$ of the molten material is set to 100 [m/s] is that a forging material having a relative density of not lower than 90% can be stably obtained by suppressing the gate passage velocity $Vg$ of the molten material to a value lower than that value.

Furthermore, according to the sixth aspect of the present invention, based on the above aspect of the invention, the molding is carried out by setting the gate passage velocity $Vg$ of the molten material to a value of not greater than 80 [m/s].

The reason why the upper limit value of the gate passage velocity $Vg$ of the molten material is set to 80 [m/s] is that a forging material having a relative density of not lower than 90% can be more stably obtained by suppressing the gate passage velocity $Vg$ of the molten material to a value lower than that value even when molding a thick forging material.

Furthermore, according to the seventh aspect of the present invention, based on the above aspect of invention, the ratio $Sg/Sw$ of the gate cross-section area $Sg$ to the molding cavity maximum cross-section area $Sw$ is set to a value of not smaller than 0.1.

The reason why the ratio $Sg/Sw$ of the gate cross-section area $Sg$ to the molding cavity maximum cross-section area $Sw$ is set to the value of not smaller than 0.1 is that a forging material having a relative density of not lower than 90% can be more stably obtained by keeping the value of this ratio at the value of not smaller than 0.1 even when molding a thick forging material.

Furthermore, according to the eighth aspect of the present invention, based on the above aspect of the invention, the gate passage velocity Vg of the molten material is set to a value of not greater than 80 [m/s], and the gate passage velocity Vg [mm/s], the gate cross-section area Sg [mm$^2$] and a molding cavity capacity Wv [mm$^3$] have a relation expressed by: Vg $\cdot$ Sg/Wv $\geq$ 10 .

The reason why the upper limit value of the gate passage velocity Vg of the molten material is set to 80 [m/s] is that forging material having a relative density of not lower than 90% can be more stably obtained by suppressing the gate passage velocity Vg of the molten material to a value lower than that value even when molding a thick forging material. The reason why the value of Vg $\cdot$ Sg/Wv is set to a value of not smaller than 10 is that the possible occurrence of faulty charging can be eliminated by keeping this value not smaller than 10 even when molding a thick forging material.

Furthermore, according to the ninth aspect of the present invention, based on the above aspect of the invention, the molding is carried out by setting a molding die temperature to a temperature of not lower than 150°C and lower than 350°C.

The reason why the lower limit value of the molding die temperature (die temperature) is set to 150°C is that a forging material having a relative density of not lower than 90% is hard to be obtained when the die temperature is lower than this value, while the upper limit value of the die temperature is set to 350°C because there is a concern about the occurrence of troubles such as the excessive occurrence of "burr" and the easy leak of the molten material from the die matching surface of the molding die when the die temperature exceeds this value.

Furthermore, according to the tenth aspect of the present invention, there is provided a forging material molding apparatus for obtaining a forging material made of a light metal by injecting and charging a light metal molten material in a semi-solid state from an injection nozzle into a molding cavity of a molding die, wherein a ratio Sg/Sw of a gate cross-section area Sg to a molding cavity maximum cross-section area Sw in a direction generally perpendicular to an inflow direction of the molten material is set to a value of not smaller than 0.02, and a gate passage velocity Vg of the molten material is set to a value of not greater than 150 [m/s].

The ratio Sg/Sw of the gate cross-section area Sg to the molding cavity maximum cross-section area Sw is set to the value of not smaller than 0.02 and the upper limit value of the gate passage velocity Vg of the molten material is set to the value of 150 [m/s] because of the same reasons as those of the fourth aspect of the invention.

Furthermore, according to the eleventh aspect of the present invention, based on the above aspect of the invention, the gate passage velocity Vg of the molten material is set to a value of not greater than 100 [m/s].

The upper limit value of the gate passage velocity Vg of the molten material is set to 100 [m/s] because of the same reasons as those of the fifth aspect of the invention.

Furthermore, according to the twelfth aspect of the present invention, based on the above aspect of the invention, the gate passage velocity Vg of the molten material is set to a value of not greater than 80 [m/s].

The upper limit value of the gate passage velocity Vg of the molten material is set to 80 [m/s] because of the same reasons as those of the sixth aspect of the invention.

Furthermore, according to the thirteenth aspect of the present invention, based on the above aspect of the invention, the ratio Sg/Sw of the gate cross-section area Sg to the molding cavity maximum cross-section area Sw is set to a value of not smaller than 0.1.

The ratio Sg/Sw of the gate cross-section area Sg to the molding cavity maximum cross-section area Sw is set to the value of not smaller than 0.1 because of the same reasons as those of the seventh aspect of the invention.

Furthermore, according to the fourteenth aspect of the present invention, based on the above aspect of the invention, the gate passage velocity Vg of the molten material is set to a value of not greater than 80 [m/s], and the gate passage velocity Vg [mm/s], the gate cross-section area Sg [mm$^2$] and a molding cavity capacity Wv [mm$^3$] have a relation expressed by: Vg $\cdot$ Sg/Wv $\geq$ 10 .

The upper limit value of the gate passage velocity Vg of the molten material is set to the value of 80 [m/s] and the value of Vg $\cdot$ Sg/Wv is set to the value of not smaller than 10 because of the same reasons as those of the eighth aspect of the invention.

Furthermore, according to the fifteenth aspect of the present invention, based on either one of the tenth through fourteenth inventive aspects, the molding is carried out by keeping the molding die temperature at a temperature of not lower than 150°C and lower than 350°C.

The lower limit value of the molding die temperature (die temperature) is set to the value of 150°C and the upper limit value is set to the value of 350°C because of the same reasons as those of the ninth aspect of the invention.

Furthermore, according to the sixteenth aspect of the present invention, there is provided a forged member manufacturing method for forging the forging material molded by the molding method claimed in any one of claims 4 through 9 at a forging rate of not lower than 25%.

The reason why the forging rate is set to the value of not lower than 25% is that the relative density of the resulting forged member can be stably kept at a high value (not lower than 99%, for example) that seems to be practically preferable by carrying out the forging process at a forging rate not lower than that value.

BRIEF DESCRIPTION OF THE DRAWINGS

Fig. 1 is an partially cross sectional explanatory view schematically showing the construction of an injection molding apparatus according to an embodiment of the present invention;

Fig. 2 is an explanatory front view of a forging material sample used for a test 1;

Fig. 3 is an explanatory vertical sectional view of a forging material sample of the test 1, taken along the line Y3-Y3 of Fig. 2;

Fig. 4 is an explanatory vertical sectional view of a forged member employing the forging material sample of the test 1;

Fig. 5 is a perspective view schematically showing the cavity structure of a molding die used in a test 2 and a test 3;

Fig. 6 is a perspective view schematically showing the shape of a thick molded product according to a test 4, a test 5 and a test 6;

Fig. 7 is an explanatory plan view schematically showing the shape of a molded product according to a test 7;

Fig. 8 is a perspective view of a forging material according to a test 8;

Fig. 9 is an explanatory view schematically showing the forging process of a forging material according to the test 8;

Fig. 10 is an explanatory view showing a forged member sample obtained through the test 8;

Fig. 11 is a graph showing a relation between the pre-forging relative density and the post-forging relative density, according to the test results of the test 1;

Fig. 12 is a graph showing a relation between the gate passage velocity of a light metal molten material and the relative density of a molded product, according to the test results of the test 2;

Fig. 13 is a graph showing a relation between a ratio (Sg/Sw) of the gate cross-section area of a light metal molten material to the molding cavity maximum cross-section area and the relative density of a molded product, according to the test results of the test 3;

Fig. 14 is a graph showing a relation between the gate passage velocity of a light metal molten material and the relative density of a thick molded product, according to the test results of the test 4;

Fig. 15 is a graph showing a relation between a ratio (Sg/Sw) of the gate cross-section area of a light metal molten material to the molding cavity maximum cross-section area and the relative density of a thick molded product, according to the test results of the test 5;

Fig. 16 is a graph showing a relation between the die temperature and the relative density of a molded product, according to the test results of the test 7;

Fig. 17 is a graph showing a relation between the forging rate and the relative density of a forged member, according to the test results of the test 8;

Fig. 18 is an electron micrograph showing an example of the metallographic structure of a forged member in the case where the forging rate is set to 15% in the test 8; and

Fig. 19 is an electron micrograph showing an example of the metallographic structure of a forged member in the case where the forging rate is set to 25% in the test 8.

DETAILED DESCRIPTION OF THE PREFERRED EMBODIMENTS

Preferred embodiments of the present invention will be described in detail below with reference to the accompanying drawings taking the case where the injection molding method is adopted for the formation of a forging material as an example.

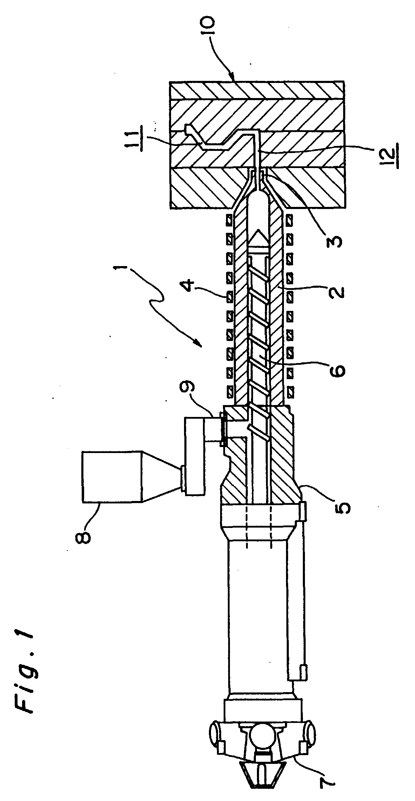

Reference is first made to the formation of a forging material according to the present embodiment. Fig. 1 is an explanatory view schematically showing the cross section of part of an injection molding apparatus for performing injection molding of a light metal forging material according to an embodiment of the present invention.

As shown in this figure, the injection molding apparatus 1 is the so-called screw type including a cylinder 2 that has a nozzle 3 at its tip portion and is to be heated by a heater 4 provided on its peripheral surface, a screw 6 that is rotatably supported inside the cylinder 2 and a molding machine body 5 connected with the cylinder 2, a rotary driver 7 provided with, for example, a motor mechanism, a speed reducer and so on for rotatively driving the screw 6, a hopper 8 in which a raw material is loaded and stored and a feeder 9 for feeding the raw material into the molding machine body 5 while measuring the raw material inside the hopper 8.

Although not specifically illustrated, the molding machine body 5 is internally provided with a high-speed injection mechanism for advancing the screw 6 toward the nozzle 3 side. This high-speed injection mechanism is constructed so as to advance the screw 6 in accordance with specified timing, detect the retreat of the screw 6 by a predetermined distance when it occurs, stop the rotation of the screw 6 and concurrently stop the retreating movement of the screw.

The injection molding apparatus 1 is set in position so that the internal path of the nozzle 3 communicates with a runner portion 12 connected with a molding cavity 11 and used with the leading end side of the cylinder 2 joined with a metallic die 10.

The raw material loaded and stored in the hopper 8 is measured by a specified amount and fed into the molding machine body 5 by the feeder 9 and then fed by the rotating screw 6 into the cylinder 2 put in a heated state. The fed raw material is heated to a specified temperature while being sufficiently stirred and kneaded by the rotation of the screw 6 inside the cylinder 2. According to the present embodiment, a light metal molten material put preferably in a semi-solid state at a temperature lower than the melting point is obtained through this process.

As the thus-obtained light metal molten material in the semi-solid state is squeezed out ahead of the screw 6, the screw 6 is retreated by the pressure. According to another method, the screw may be forcibly retreated at the desired speed.

If the screw 6 is retreated by the predetermined distance, then the high-speed injection mechanism (not shown) inside the molding machine body 5 detects the above event and stops the rotation of the screw 6 and concurrently stops the retreating movement. The measurement of the raw material may be performed by setting the distance of retreat of the screw 6.

Then, by advancing the screw 6 that stops rotating and is put in the retreated position by the high-speed injection mechanism (not shown) so as to apply a specified pressure, the light metal molten material in the semi-solid state is injected from the nozzle 3 into the metallic die 10. That is, the light metal molten material is injected from the nozzle 3 and charged into the molding cavity 11 via the runner portion 12.

In the present embodiment, a magnesium (Mg) alloy that is a kind of light metal is used as the raw material and this is fed in the form of, for example, chip-shaped pellets to the hopper 8 of the injection molding apparatus 1. A passage that extends from the hopper 8 to the inside of the molding machine body 5 is preferably filled with an inert gas (argon, for example) for preventing the oxidation reaction of the raw material (Mg alloy pellets).

The molding cavity 11 of the metallic die 10 is preferably formed into a shape that resembles the shape of the forming cavity of the forging die (not shown) used for the forging process to be performed after this injection molding, and there can be obtained a half-finished injection molded product (forging material) resembling the forged member that is the product to be obtained in the subsequent process.

This enables the simplification of the forging process to only one process of the finishing forging and enables the forging of even a member of a complicated shape. Furthermore, even a material of an inferior forging property can be subjected to the forging process without a hitch.

According to the present embodiment, the advancement velocity (preferably, also the retreat velocity) of the screw 6 of the injection molding apparatus 1 is set to a value of not smaller than 1 [m/s]. The lower limit value of the screw velocity is set to 1 [m/s] because the cycle time in the manufacturing stage becomes too long to cause a lack of practicality if the lower limit is set lower than this value, although the occurrence of gas defect due to the involvement of gas in the manufacturing stage of the forging material can be reduced.

Even in the case where a forging material is molded by the injection molding method carried out by using a molten material in the completely molten state, it is preferable to set the screw velocity to a value of not smaller than 1 [m/s]. Also, even in the case where the manufacturing of the forging material is carried out by the die casting method instead of the injection molding method, it is preferable to set the plunger velocity to a value of not smaller than 1 [m/s] (meter per second) ].

The lower limit value of the plunger velocity of the die casting method and the screw velocity of the injection molding method is set to 1 [m/s] because the cycle time in the manufacturing stage becomes too long to cause a lack of practicality if the lower limit is lower than this value, although the occurrence of gas defect due to the involvement of gas in the manufacturing stage of the forging material can be reduced.

A variety of tests have been performed in order to obtain a high-quality forging material made of a light metal alloy that has a small quantity of defects and is molded by the injection molding apparatus 1 by properly setting the injection molding conditions, and to make the forged member obtained by subjecting the forging material to a forging process have excellent strength characteristics and soundness by properly setting forging conditions.

The tests will be described below. First, the chemical compositions of the alloys used as samples of these series of tests are shown in Table 1. It is to be noted that the alloy B and alloy D among the alloys A through D shown in Table 1 correspond to ASTM AZ91D, which is normally considered to be inappropriate for use in the forging works because of the degraded forging property.

Table 1

|  | Al | Zn | Mn | Fe | Ni | Cu | Mg |
|---|---|---|---|---|---|---|---|
| (Unit: Percent by Weight) | | | | | | | |
| Alloy A | 7.2 | 0.2 | 0.22 | 0.003 | 0.0008 | 0.001 | Remainder |
| Alloy B | 9.2 | 0.7 | 0.22 | 0.004 | 0.0008 | 0.002 | Remainder |
| Alloy C | 6.2 | 0.9 | 0.23 | 0.003 | 0.0008 | 0.001 | Remainder |
| Alloy D | 8.9 | 0.7 | 0.24 | 0.003 | 0.0008 | 0.001 | Remainder |

〈Test 1〉

Reference is first made to a test 1 that examined the influence of the relative density in the material stage (i.e., before forging) exerted on the relative density of the member obtained through the forging.

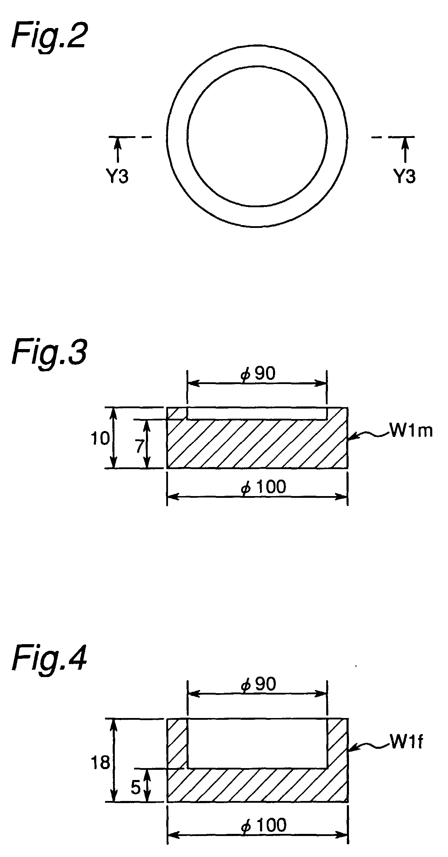

Figs. 2 and 3 are an explanatory plan view and an explanatory vertical section view showing the shape of a forging material sample used in this test. Fig. 4 is an explanatory vertical section view of the sample obtained through the forging. In Fig. 3 and Fig. 4, the numbers representing the dimensions are indicated in millimeters ([mm]). The alloy A among the tour types of the alloy samples shown in Table 1 was used as a material in the test

As is apparent from these figures, the forging material sample W1m used in this test is formed roughly in a disk-like shape provided with an annular projection on the outer peripheral surface of the upper side. A forged member W1f is obtained by applying a forging pressure to a recess at the center with in a state in which the material is regulated by a forging die (not shown) so that the outer diameter and the width of the annular projection (i.e., the inner diameter dimension and the outer diameter dimension of the annular projection) are not changed.

In this stage, only the inner diameter and outer diameter of the annular projection of the forging material W1m are regulated, and therefore, it is to be plastically deformed so that the center portion with the recess becomes thin and the annular projection becomes high. That is, the forging process for obtaining the forged member W1f shown in Fig. 4 from the forging material W1m shown in Fig. 2 and Fig. 3 is carried out by the so-called unclosed forging method for allowing at least part (the upper surface side of the annular projection in this case) of the forging material W1m to be freely plastically deformed instead of being restrained by the forging die in the forging space that is defined by the forging die and is not completely closed. As is well known, in the case of this unclosed forging method, it is considered very difficult to completely remove the defects included in the material W1m through the forging process.

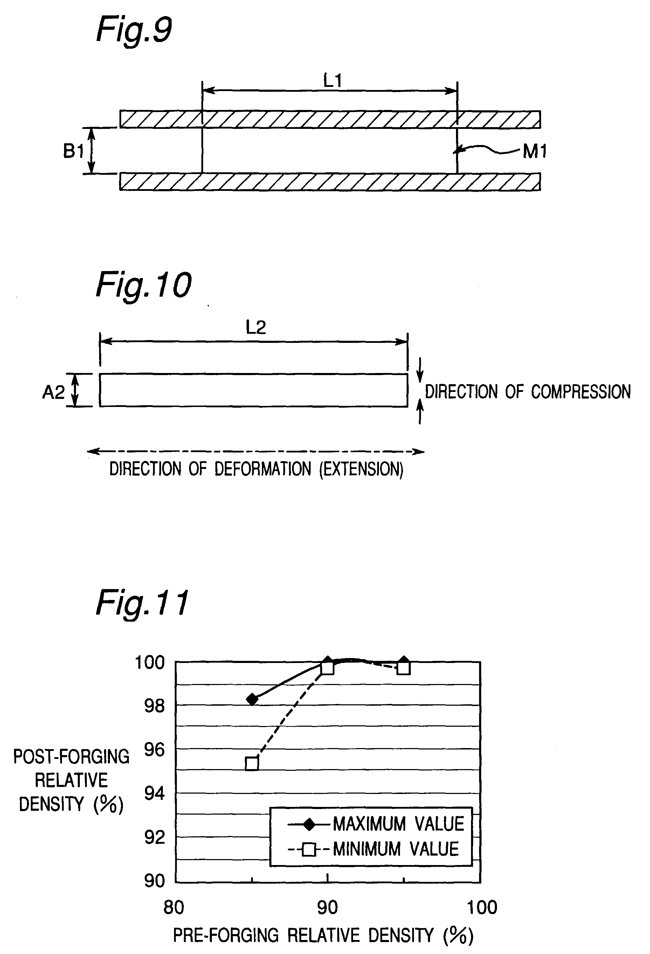

The forged member W1f obtained as described above was subjected to the measurement of the relative density of the member after the forging when the relative density in the material stage (i.e., before the forging) was changed from about 85% to 95%. The measurement results are shown in Fig. 11.

As clearly shown in the graph of Fig. 11, if the pre-forging relative density is not lower than about 90%, then the post-forging relative density has a very small variation between the maximum value and the minimum value, and the relative density surely exceeds 99% at minimum and comes to have a very high value close to 100%. If the pre-forging relative density is lower than about 90%, then the post-forging relative density has a large variation between the maximum value and the minimum value as the value reduces, and the numerical level of the relative density is sharply reduced.

Therefore, unique effects and operations due to the use of the semi-solid injection molding method are obtained. Also, by setting the pre-forging relative density in the material stage to the value of not lower than 90%, the relative density of the resulting forged member can be stably kept at a high value (not lower than 99%, for example) that seems to be practically preferable when the forging process is carried out with the material. That is, a sound forged member can be obtained by effectively removing the defects inside the material generated in the material molding stage.

Even when the Mg alloy that generally seems to have degraded forging properties is used as a material, a sound forged member can be obtained by removing the defects inside the material through the forging process.

Furthermore, the semi-solid injection molding method is used in this test 1, and therefore, the unique effects and operations due to the use of the semi-solid injection molding method are obtained in manufacturing the forging material. When adopting the die casting method or the normal injection molding method (using a molten material in a completely molten state), a sufficiently high productivity can be secured by adopting these processes with the cycle time in the manufacturing stage properly maintained by setting the plunger velocity of the die casting method and the screw velocity of the injection molding method to a value of not smaller than 1 [m/s].

Since the relative density in the material stage is not lower than 90% even in this case, by carrying out the forging process by means of the material, the relative density of the resulting forged member can be stably kept at a high value (not lower than 99%, for example) that considered to be practically preferable (even by the unclosed forging method). This allows a sound forged member to be obtained by effectively removing the defects such as gas defect inside the material generated in the material molding stage.

〈Test 2〉

Reference is next made to a test 2 that examined the influence of the gate passage velocity of the molten material through the semi-solid injection molding exerted on the relative density of the molded product (forging material). In this test 2, the alloy B among the four alloy samples shown in Table 1 was used as a material.

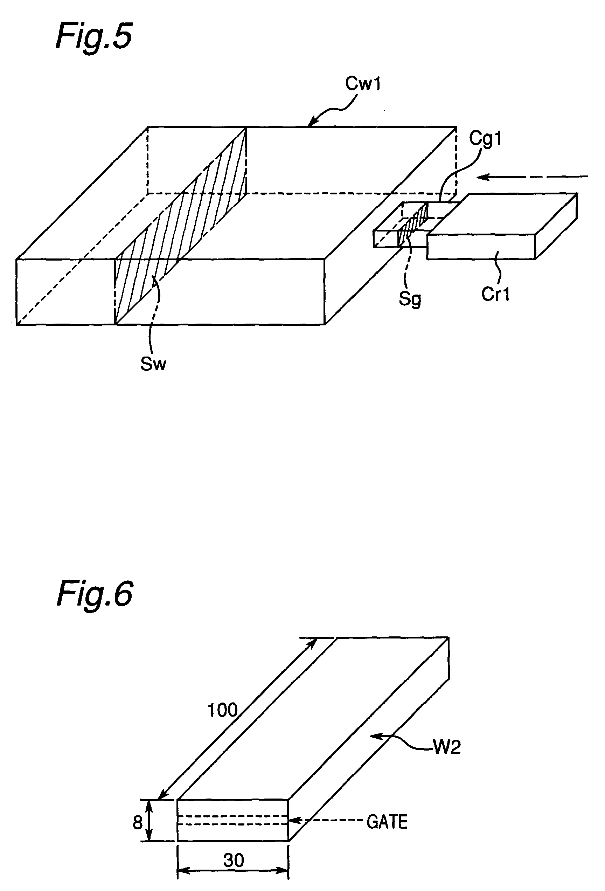

Fig. 5 is an explanatory view schematically showing the cavity structure of the molding die used in this test 2. According to this molding die, a runner section Cr1 is connected via a gate section Cg1 to a molding cavity Cw1 corresponding to the shape of the molded product. A molten material that has flowed through the runner section Cr1 in the direction of arrow shown in the figure is charged from the gate section Cg1 having a small passage area Sg (gate cross-section area) into the molding cavity Cw1. In this stage, the gate section Cg1 is choked so as to have a gate cross-section area Sg much smaller than that of the runner section Cr1, and therefore, the flow velocity of the molten material is increased when passing through the gate section.

In this test 2, the relative density of the molded product (forging material) when the velocity (gate passage velocity Vg) of the molten material passing through the gate section Cg1 was changed was measured. It is to be noted that the gate passage velocity Vg of this molten material can be changed by adjusting the molten material injection velocity from the injection nozzle, the gate cross-section area Sg or the like.

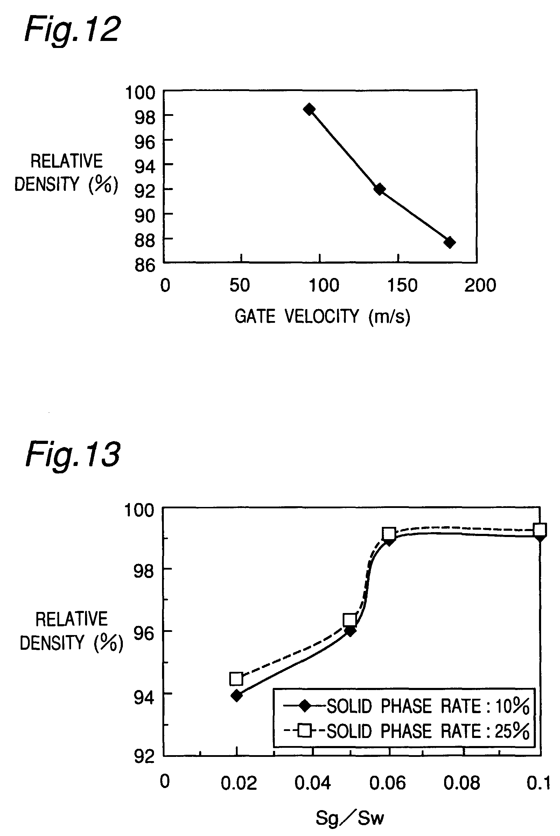

The measurement result is shown in Fig. 12. As clearly shown in the graph of Fig. 12, it was discovered that the relative density of the molded product reduced as the gate passage velocity Vg (gate velocity) increased and the relative density came under 90% when the gate velocity exceeded a velocity of about 150 [m/s]. This seems to depend on the fact that the flow state of the molten material in the injecting and charging stage becomes more difficult to be kept in a state close to a laminar flow as the gate velocity increases.

Therefore, when forming a forging material by the semi-solid injection molding, the molten material can be injected and charged in the state closer to the laminar flow into the molding cavity by setting the gate passage velocity Vg of the molten material to a value of not greater than 150 [m/s], and a forging material having a relative density of not lower than 90% can be stably obtained.

〈Test 3〉

Reference is next made to a test 3 that examined the influence of a ratio Sg/Sw of a gate cross-section area Sg shown in Fig. 5 to a maximum cross-section area Sw of the molding cavity (in the direction roughly perpendicular to the inflow direction of the molten material) exerted on the relative density of the molded product (forging material).

In this test 3, the relative density of the molded product (forging material) was measured by changing the value of the ratio Sg/Sw from 0.02 to 0.1 in the case where the solid phase rate is 10% and the case where the solid phase rate is 25%. In this test 3, the alloy B among the four alloy samples shown in Table 1 was used as a material. The measurement results are shown in Fig. 13.

As clearly shown in the graph of Fig. 13, the relative density of the forging material is roughly constant when the ratio Sg/Sw is not smaller than about 0.06, and a high value of about 99% can be kept. When the ratio Sg/Sw is not greater than about 0.06, the relative density reduces as this value reduces. However, even when the ratio Sg/Sw = 0.02 at the lower limit of the measurement range, the relative density is not lower than 94%, meaning that the ratio sufficiently exceeds 90% necessary for obtaining a sound forged member.

The relative density reduces as the solid phase rate reduces. However, according to the graph of Fig. 13, the molten material can be injected and charged in a state closer to the laminar flow into the molding cavity, by setting the ratio Sg/Sw to a value of not smaller than 0.02, even if it is supposed that the solid phase rate is very low (in particular, the completely molten state in which the solid phase rate is 0%), and this allows a forging material having a relative density of not lower than 90% to be reliably obtained.

The relative density of the resulting molded product reduces as the value of the ratio Sg/Sw of the gate cross-section area Sg to the maximum cross-section area Sw (in the direction roughly perpendicular to the inflow direction of the molten material) of the molding cavity reduces presumably because the flow abruptly increases when the molten material flows from the gate section Cg1 into the molding cavity Cw1 as the value of this ratio reduces and because the gas tends to be easily involved due to the difficulty in maintaining the flow state close to the laminar flow.

〈Test 4〉

Reference is next made to a test 4 that examined the influence of the gate velocity exerted on the relative density of the molded product when moldting a thick molded product (forging material) by semi-solid injection molding.

Fig. 6 is a perspective view showing the exterior shape of a molded product (forging material) to be molded in this test, where the numbers representing the dimensions are indicated in millimeters ([mm]). The alloy C and alloy D among the four types of the alloy samples shown in Table 1 were used as a material.

With regard to the thickness of the molded product (or the casted product), it is an established practical standerd that the thickness is normally limited to a thickness of about 6 [mm] in the case of, for example, die casting method and is limited to a thickness of about 2 to 3 [mm] at most in the case of the injection molding even on a trial production level. In contrast to this, as shown in Fig. 6, the forging material of this test has a thickness of 8 [mm] or set to be very thick.

In molding the thick forging material by the semi-solid injection molding, the relative density of the molded product (forging material) was measured when the velocity (gate passage velocity Vg) of the molten material passing through the gate section Cg1 was changed, similarly to the case of the test 2.

In this test 4, the relative density of the molded product (forging material) was measured by changing the gate velocity Vg from about 25 [m/s] to 100 [m/s] in the case where the solid phase rate was 23% (alloy D) and the case where the solid phase rate was 40% (alloy C). Further, measurement was performed by setting the ratio Sg/Sw of the gate cross-section area Sg to the molding cavity maximum cross-section area Sw (in the direction roughly perpendicular to the inflow direction of the molten material) of the molding cavity to a value of 0.2 and making the gate passage velocity Vg [mm/s], the gate cross-section area Sg [mm$^2$] and the molding cavity capacity Wv [mm$^3$] have a relation expressed by Vg・Sg/Wv $\geq$ 10 .

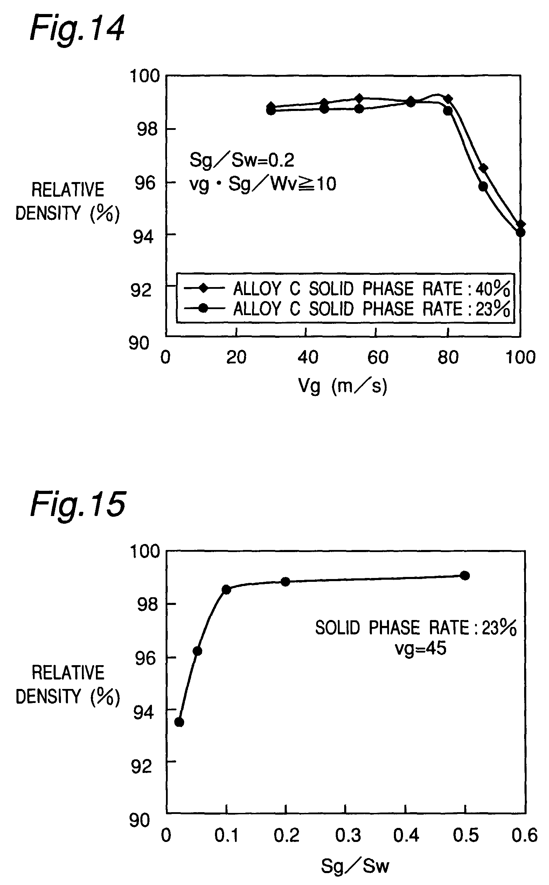

The measurement results are shown in Fig. 14. As clearly shown in the graph of Fig. 14, the relative density of the forging material is roughly constant and a high value of about 99% can be kept when the gate velocity Vg is not greater than about 80 [m/s]. When the gate velocity Vg is greater than about 80 [m/s], the relative density reduces as this value increases. However, the relative density is not smaller than 94% even at the upper limit of the measurement range expressed by Vg = 100 [m/s ], and this value sufficiently exceeds 90% necessary for obtaining a sound forged member.

The relative density reduces as the solid phase rate reduces. According to the graph of Fig. 14, the molten material can be easily injected and charged in a state closer to the laminar flow into the molding cavity, even if it is supposed that the solid phase rate is very low (in particular, the completely molten state in which the solid phase rate is 0%), and this allows a forging material having a relative density of not lower than 90% to be reliably obtained.

Therefore, even if the molded product is thick or assuming that the solid phase rate is very low (in particular, the completely molten state in which the solid phase rate is 0%), the molten material can be injected and charged in a state closer to the laminar flow into the molding cavity in molding a forging material through the semi-solid injection molding by setting the gate passage velocity Vg of the molten material to a value of not greater than 100 [m/s], and this allows a forging material having a relative density of not lower than 90% to be stably obtained with the quantity of defects effectively restrained.

More preferably, a forging material having a higher relative density can be stably obtained by setting the gate passage velocity Vg of the molten material to a value of not greater than 80 [m/s].

〈Test 5〉

Reference is next made to a test 5 that examined the influence of the ratio Sg/Sw of the gate cross-section area Sg to the maximum cross-section area Sw of the molding cavity (in the direction roughly perpendicular to the inflow direction of the molten material) exerted on the relative density of the molded product (forging material) when a thick molded product (forging material) shown in Fig. 6 is formed by the semi-solid injection molding.

In this test 5, the relative density of the molded product (forging material) was measured by changing the value of the ratio Sg/Sw within a range of 0.02 to 0.5 in the case where the solid phase rate was 23%. Furthermore, this test was carried out by setting the gate passage velocity Vg to 45 [m/s]. In this test 5, the alloy D among the four types of the alloy samples shown in Table 1 was used as a material. The measurement result is shown in Fig. 15.

As clearly shown in the graph of Fig. 15, the relative density of the forging material is roughly constant and a high value of not lower than 99% can be kept when the ratio Sg/Sw is not smaller than about 0.1. When the ratio Sg/Sw is smaller than about 0.1, the relative density sharply reduces as this value reduces. However, even when the ratio Sg/Sw = 0.02 at the lower limit of the measurement range, the relative density is not lower than 93%, meaning that the ratio sufficiently exceeds 90% necessary for obtaining a sound forged member.

Therefore, by setting the ratio Sg/Sw of the gate cross-section area Sg to the maximum cross-section area Sw of the molding cavity (in the direction roughly perpendicular to the inflow direction of the molten material) to a value of not smaller than 0.1, the molten material can be injected and charged in a state closer to the laminar flow into the molding cavity, and a forging material having a relative density of not lower than 90% can be more stably obtained. Furthermore, even when molding a thick forging material, a forging material having a relative density of not lower than 90% can be more stably obtained by effectively restraining the quantity of defects.

〈Test 6〉

Reference is next made to a test 6 that examined the influence of the relation between the gate passage velocity Vg [mm/s], the gate cross-section area Sg [mm$^2$] and the molding cavity capacity Wv [mm$^3$] exerted on the charging property of the molten material into the molding cavity when the thick molded product (forging material) shown in Fig. 6 is formed by the semi-solid injection molding. It is to be noted that the alloy C and alloy D among the four types of the alloy samples shown in Table 1 were each used as a material.

In this test 6, molding was carried out by changing the value of Vg · Sg/Wv within a range of 5 to 150 in the case where the solid phase rate is 40% (alloy C) and the case where the solid phase rate is 52% (alloy D), and the presence or absence of the faulty charging of each molded product was examined. This sixth test was carried out by setting the value of ratio Sg/Sw of the gate cross-section area Sg to the maximum cross-section area Sw (in the direction roughly perpendicular to the inflow direction of the molten material) of the molding cavity to 0.2 and setting the gate passage velocity Vg to a value of not greater than 80 [m/s].

The test results are shown in the following Table 2.

Table 2

| Alloy | Solid Phase Rate | Vg.Sg/Wv | Faulty Charging |
|-------|-----------------|----------|-----------------|
| C     | 40              | 5        | Present         |
|       |                 | 10       | Absent          |
|       |                 | 30       | Absent          |
|       |                 | 70       | Absent          |
|       |                 | 150      | Absent          |
| D     | 52              | 5        | Present         |
|       |                 | 10       | Absent          |
|       |                 | 30       | Absent          |
|       |                 | 70       | Absent          |
|       |                 | 150      | Absent          |

*Sg/Sw=0.2, Vg≥80

As clearly shown in of Table 2, the faulty charging occurred when the value of Vg · Sg/Wv was five and the faulty charging did not occur when this value is not smaller than ten, regardless of the solid phase rate.

Therefore, by making the gate passage velocity Vg [mm/s], the gate cross-section area Sg [mm$^2$] and the molding cavity capacity Wv [mm$^3$] have a relation expressed by Vg · Sg/Wv ≥ 10, the concern about the possible occurrence of faulty charging can be eliminated even when molding a thick forging material.

Furthermore, even in this case, by setting the gate passage velocity Vg of the molten material to a value of not greater than 80 [m/s], the molten material can be injected and charged in a state much closer to the laminar flow into the molding cavity, and a forging material having a relative density of not lower than 90% can be much more stably obtained. Furthermore, even when molding a thick forging material, a forging material having a relative density of not lower than 90% can be more stably obtained by effectively restraining the quantity of defects.

〈Test 7〉

Reference is next made to a test 7 that examined the influence of the molding die temperature (die temperature) exerted on the relative density of the molded product (forging material) when a thick molded product is formed by the semi-solid injection molding.

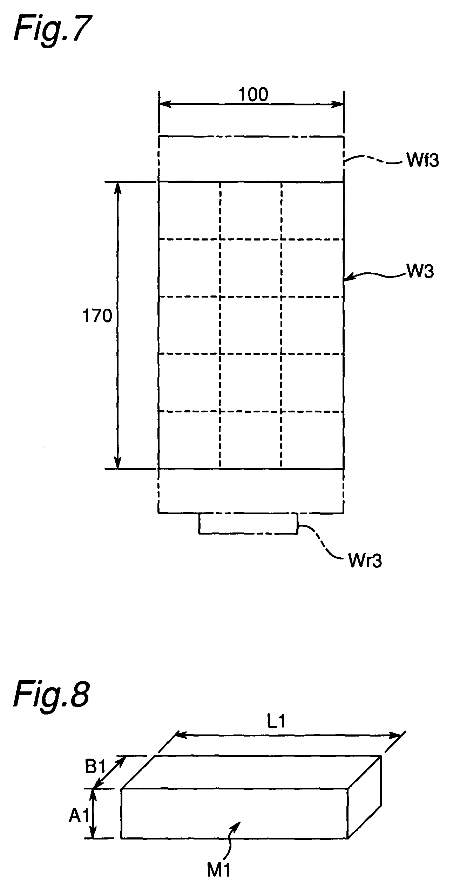

Fig. 7 is an explanatory plan view of a molded product W3 of this test 7, where the reference numerals Wr3 and Wf3 indicate the imaginary portions corresponding to a runner section and an overflow section, respectively, in the molding die. It is to be noted that the numbers representing the dimensions are indicated in millimeters ([mm]) in Fig. 7, where the thickness of the gate section and the thickness of the molded product W3 are set to 2 [mm] and 10 [mm], respectively. In this test 7, the alloy A among the four types of alloy samples shown in Table 1 was used as a material.

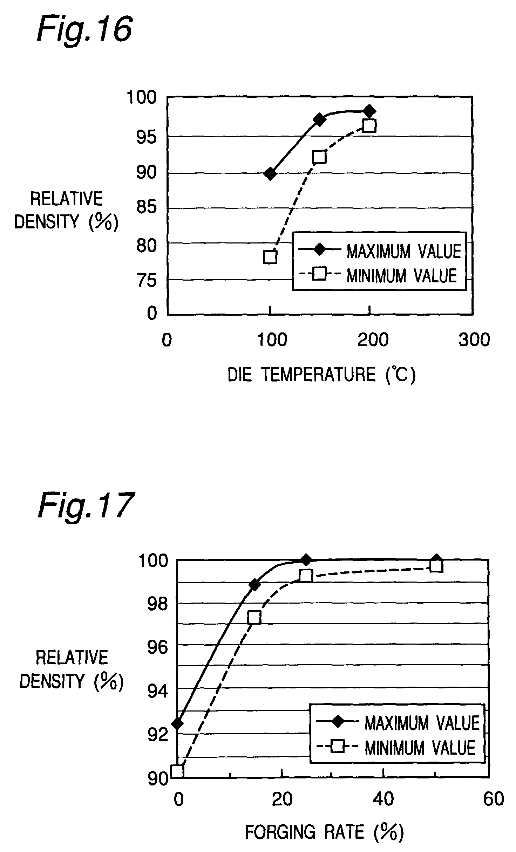

In this test 7, molding was carried out by changing the die temperature within a range of 100°C to 200°C in the case where the solid phase rate is 20%, and the relative density of each resulting molded product (forging material) was measured. In connection with this measurement, the molded product W3 was divided into 15 parts as shown in Fig. 7, and the relative densities of the divided parts were measured to examine the magnitude of variation. The measurement results are shown in Fig. 16.

As clearly shown in the graph of Fig.16, the relative density of the resulting molded product is lower and the variation becomes greater as the setting value of the die temperature becomes lower. However, it was discovered that a relative density of not lower than 90% could be obtained, even at the lower limit value of the variation, by keeping the die temperature not lower than 150°C.

With regard to the upper limit value of the die temperature, it is known that the troubles such as the excessive occurrence of "burr" or the easy leak of the molten material from the die matching surface of the molding die tend to easily occur when the die temperature is set to a temperature of not lower than about 350°C.

That is, by carrying out the molding by keeping the molding die temperature of not lower than 150°C and lower than 350°C, the troubles such as the excessive occurrence of "burr" or the easy leak of the molten material from the die matching surface of the molding die are avoided, and a forging material having a relative density of not lower than 90% can be stably obtained even for a thick molded product.

〈Test 8〉

Reference is next made to a test 8 that examined the influence of the forging rate in the forging process exerted on the relative density of the forged member.

Figs. 8 through 10 schematically show the method of obtaining samples of the forged member with an Mg alloy forging material in this test 8. In this test, as shown in Fig. 8, a rectangular parallelepiped magnesium alloy forging material M1 having the dimensions of A1 (height) × B1 (width) × L1 (length) was prepared, held between a pair of fixing plates P1 so as to be checked in, for example, the widthwise direction of this material M and subjected to plastic working (forging process) with a compression load applied in the vertical direction (a direction perpendicular to sheet surface in Fig. 9) in this state, for the formation of a sample of the forged member as shown in Fig. 10.

As a result, the dimension in the vertical direction of the material M1 is changed from the initial value A1 to A2 (shortened), and the length is changed from the initial value L1 to L2 (elongated). In this case, the forging rate of this forging is calculated according to the following equation (1):

$$\text{forging rate} = (A1 - A2)/A1 \times 100[\%] \tag{1}$$

In the present embodiment, the initial basic dimensions (see Fig. 8) of the forging material M1 was set to the values of A1= A2= 12 [mm] and L1 = 50 [mm]. The thus-obtained forged member samples were subjected as specimens to the measurement of the relative density.

In this test 8, the forging materials having a relative density of 90% to 92.5% before forging (forging rate is 0%) were subjected to a forging process while varying the forging rate within a range of 0 to 50%, and the relative densities of the resulting forged products were measured. In this test 8, the alloy A among the four alloy samples shown in Table 1 was used as a material.

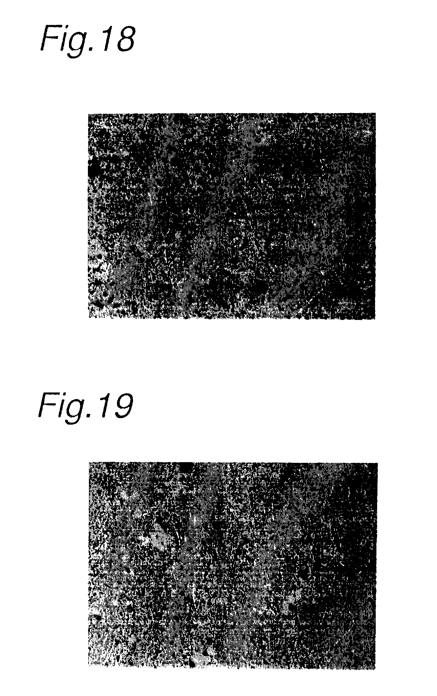

The test results are shown in Fig. 17. Electron micrographs (each having a magnification of 50 times) showing examples of the metallographic structures of forged members in the case where the forging rate is 15% and the case where the forging rate is 25% are shown in Fig. 18 and Fig. 19, respectively.

As clearly shown in the graph of Fig. 17, the relative density of the forged member is close to a constant value and a high value exceeding about 99% can be kept when the forging rate is not lower than about 25%. When the forging rate is lower than about 25%, the relative density sharply reduces as the forging rate reduces, and the variation between the maximum value and the minimum value increases.

That is, the compression force exerted on the material through the forging process is consumed for the purpose of removing the defects inside the material and making the material sound when the forging rate is lower than about 25%. In order to increase the strength through the forging by further plastically deforming the material after the removal of the defects inside the material, the forging rate must be set not lower than 25%.

According to the electron micrographs shown in Fig. 18 and Fig. 19, the portions existing in the form of black lumps or dots are the defective portions. It can be found that the defects are rather minimized when the forging rate is 25% than when the forging rate is 15%.

According to the above description, the relative density of the resulting forged member can be kept at a high value (not lower than 99%, for example) that seems to be practically preferable, by setting the forging rate not lower than 25%. That is, a sound forged member can be obtained by effectively removing the defects inside the material generated in the material molding stage.

As described above, according to the present embodiment, by setting the relative density in the material (forging material) stage to a value of not lower than 90%, the relative density of the forged member obtained through the forging process using this material can be stably secured at a very high value. In the case of the semi-solid injection molding, by properly setting the factors of the gate cross-section area of the molding die, the gate passage velocity of the molten material, the volume and maximum cross-section area of the molding cavity and so on, the relative density of the resulting molded product (forging material) can be effectively improved to allow the quantity of defects to be reduced. Furthermore, by setting the forging rate not lower than 25% in forging a forging material having a relative density of not lower than 90%, the defects inside the material generated in the material molding state can be effectively removed to allow a sound forged member to be obtained.

The aforementioned embodiments have been described on the basis of the case where the semi-solid injection molding method is used for the molding of the forging material. However, the present invention is not limited to this and is able to be effectively applied to the case where a variety of other processes are adopted for the molding of a forging material by the semi-solid casting method, the injection molding method using a light metal molten material in the completely molten state or the casting method of, for example, the die casting method. Although the aforementioned embodiments used the Mg alloy as a material to be injected, the present invention can also be effectively applied to the case where a light metal of another kind is used as a material.

As described above, the present invention is limited to neither one of the aforementioned embodiments and is, of course, allowed to be subjected to a variety of modifications and improvements in terms of design within a scope not departing from the essence thereof.

ADVANTAGES OF THE INVENTION

According to the forging material of the first aspect of the present invention, the plunger velocity of the die casting method and the screw velocity of the injection molding method are each set not smaller than 1 [m/s]. With this arrangement, the cycle time in the manufacturing stage is properly maintained, and a sufficiently high productivity can be secured by adopting these processes. In this case, the relative density is not lower than 90% in the material stage. Therefore, by carrying out the forging process using the material, the relative density of the forged member obtained (even in the case of the so-called unclosed forging method) can be kept at a high value (not lower than 99%, for example) that seems to be practically preferable. That is, a sound forged member can be obtained by removing the defects such as gas defect inside the material generated in the material molding stage.

According to the second aspect of the present invention, basically effects similar to those of the above aspect of the invention can be produced. Specifically, the particular effects and operations due to the use of the semi-solid injection molding method can be obtained, and the relative density is not lower than 90% in the material stage. Therefore, by carrying out the forging process using the material, the relative density of the forged member obtained (even in the case of the so-called unclosed forging method) can be stably kept at a high value (not lower than 99%, for example) that seems to be practically preferable. That is, a sound forged member can be obtained by removing the defects inside the material generated in the material molding stage.

According to the third aspect of the present invention, basically effects similar to those of the above aspect of the invention can be produced. In particular, even when the Mg alloy that is generally considered to have a degraded forging property is used as a material, the defects inside the material are effectively removed through the forging process, allowing a sound forged member to be obtained.

According to the forging material molding method of the fourth aspect of the present invention, the particular effects and operations due to the use of the semi-solid injection molding method can be obtained, and the gate passage velocity Vg of the molten material is set not greater than 150 [m/s] in molding the forging material by this semi-solid injection molding. With this arrangement, the molten material can be injected and charged into the molding cavity in a state closer to the laminar flow, and a forging material having a relative density of not lower than 90% can be stably obtained. Furthermore, by setting the ratio Sg/Sw of the gate cross-section area Sg to the molding cavity maximum cross-section area Sw (in the direction roughly perpendicular to the inflow direction of the molten material) to the value of not smaller than 0.02, the molten material can be injected and charged in a state closer to the laminar flow into the molding cavity even if it is supposed that the solid phase rate is very low (in particular, the completely molten state in which the solid phase rate is 0%), and this allows a forging material having a relative density of not lower than 90% to be obtained.

Then, by carrying out the forging process using a forging material having a relative density of not lower than 90% in the material stage, the relative density of the forged member obtained (even in the case of the so-called

EP 1 040 883 A1

unclosed forging) can be stably kept at a high value (not lower than 99%, for example) that seems to be practically preferable. That is, a sound forged member can be obtained by removing the defects inside the material generated in the material molding stage.

According to the fifth aspect of the present invention, basically effects similar to those of the above aspect of the invention can be produced. In particular, even when molding a thick forging material or even if it is supposed that the solid phase rate is very low (in particular, the completely molten state in which the solid phase rate is 0%), by setting the gate passage velocity Vg of the molten material to a value of not greater than 100 [m/s], the molten material can be injected and charged in a state closer to the laminar flow into the molding cavity, and this allows a forging material having a relative density of not lower than 90% to be more stably obtained by effectively restraining the quantity of defects.

According to the sixth aspect of the present invention, basically effects similar to those of the above aspect of the invention can be produced. In particular, the gate passage velocity Vg of the molten material is set not greater than 80 [m/s]. This allows the molten material to be injected and charged in a state closer to the laminar flow into the molding cavity and allows a forging material having a relative density of not lower than 90% to be more stably obtained. Even when molding a thick forging material, a forging material having a relative density of not lower than 90% can be more stably obtained by effectively restraining the quantity of defects.

According to the seventh aspect of the present invention, basically effects similar to those of the avove aspect of the nvention can be produced. In particular, the ratio Sg/Sw of the gate cross-section area Sg to the molding cavity maximum cross-section area Sw (in the direction roughly perpendicular to the inflow direction of the molten material) is set not smaller than 0.1. This allows the molten material to be injected and charged in a state closer to the laminar flow into the molding cavity and allows a forging material having a relative density of not lower than 90% to be more stably obtained. Even when molding a thick forging material, a forging material having a relative density of not lower than 90% can be more stably obtained by effectively restraining the quantity of defects.

According to the eighth aspect of the present invention, basically effects similar to those of the above aspect of the invention can be produced. In particular, the gate passage velocity Vg of the molten material is set not greater than 80 [m/s]. This allows the molten material to be injected and charged in a state much closer to the laminar flow into the molding cavity and allows a forging material having a relative density of not lower than 90% to be more stably obtained. Even when molding a thick forging material, a forging material having a relative density of not lower than 90% can be more stably obtained by effectively restraining the quantity of defects.

Also, the gate passage velocity Vg [mm/s], the gate cross-section area Sg [mm$^2$] and the molding cavity capacity Wv [mm$^3$] have the relation expressed by $Vg \cdot Sg/Wv \geq 10$. This eliminates the concern about the possible occurrence of defective charging even when molding a thick forging material.

According to the ninth aspect of the present invention, basically effects similar to those of the above aspect of the invention can be produced. In particular, the molding is carried out with the molding die temperature set not lower than 150°C and lower than 350°C. With this arrangement, a forging material having a relative density of not lower than 90% can be more stably obtained, while avoiding the troubles such as the excessive occurrence of "burr" and the easy leak of the molten material from the die matching surface of the molding die.

According to the forging material molding apparatus of the tenth aspect of the present invention, the particular effects and operations due to the use of the semi-solid injection molding method are obtained. In molding the forging material through this semi-solid injection molding, the gate passage velocity Vg of the molten material is set not greater than 150 [m/s]. Therefore, the molten material can be injected and charged in a state closer to the laminar flow into the molding cavity, and a forging material having a relative density of not lower than 90% can be stably obtained. The ratio Sg/Sw of the gate cross-section area Sg to the molding cavity maximum cross-section area Sw (in the direction roughly perpendicular to the inflow direction of the molten material) is set not smaller than 0.02. Therefore, the molten material can be injected and charged in a state closer to a laminar flow into the molding cavity, even if it is supposed that the solid phase rate is very low (in particular, the completely molten state in which the solid phase rate is 0%), and this allows a forging material having a relative density of not lower than 90% to be obtained.

Then, by carrying out the forging process using the forging material having a relative density of not lower than 90% in the material stage, the relative density of the forged member obtained (even in the case of the so-called unclosed forging) can be stably kept at a high value (not lower than 99%, for example) that seems to be practically preferable. That is, a sound forged member can be obtained by effectively removing the defects inside the material generated in the material molding stage.

According to the eleventh aspect of the present invention, basically effects similar to those of the above aspect of the invention can be produced. In particular, the gate passage velocity Vg of the molten material is set not greater than 100 [m/s] . Therefore, the molten material can be injected and charged in a state closer to the laminar flow into the molding cavity even when molding a thick forging material or if it is supposed that the solid phase rate is very low (in particular, the completely molten state in which the solid phase rate is 0%), and this allows a forging material having a relative density of not lower than 90% to be more stably obtained by effectively restraining the quantity of defects.

According to the twelfth aspect of the present invention, basically effects similar to those of the above aspect of the invention can be produced. In particular, the gate passage velocity Vg of the molten material is set not greater than 80 [m/s]. This allows the molten material to be injected and charged in a state closer to the laminar flow into the molding cavity and allows a forging material having a relative density of not lower than 90% to be more stably obtained. Even when molding a thick forging material, a forging material having a relative density of not lower than 90% can be more stably obtained by effectively restraining the quantity of defects.

Aaccording to the thirteenth aspect of the present invention, basically effects similar to those of the above aspect of the invention can be produced. In particular, the ratio Sg/Sw of the gate cross-section area Sg to the molding cavity maximum cross-section area Sw (in the direction roughly perpendicular to the inflow direction of the molten material) is set not smaller than 0.1. This allows the molten material to be injected and charged in a state much closer to the laminar flow into the molding cavity and allows a forging material having a relative density of not lower than 90% to be more stably obtained. Also, even when molding a thick forging material, a forging material having a relative density of not lower than 90% can be more stably obtained by effectively restraining the quantity of defects.

According to the fourteenth aspect of the present invention, basically effects similar to those of the above aspect of the invention can be produced. In particular, the gate passage velocity Vg of the molten material is set not greater than 80 [m/s]. This allows the molten material to be injected and charged in a state closer to the laminar flow into the molding cavity and allows a forging material having a relative density of not lower than 90% to be more stably obtained. Also, even when molding a thick forging material, a forging material having a relative density of not lower than 90% can be more stably obtained by effectively restraining the quantity of defects.

Furthermore, the gate passage velocity Vg [mm/s], the gate cross-section area Sg [mm$^2$] and the molding cavity capacity Wv [mm$^3$] have the relation expressed by $Vg \cdot Sg/Wv \geq 10$ . This can eliminate the concern about the possible occurrence of defective charging even when molding a thick forging material.

According to the fifteenth aspect of the present invention, basically effects similar to those of the above aspect of the invention can be produced. In particular, the molding die temperature is set not lower than 150°C and lower than 350°C. With this arrangement, a forging material having a relative density of not lower than 90% can be more stably obtained while avoiding the troubles such as the excessive occurrence of "burr" and the easy leak of the molten material from the die matching surface of the molding die.

According to the forged member manufacturing method of the sixteenth aspect of the present invention, the forging material molded by the molding method of either one of the fourth through ninth inventive aspects is forged at a forging rate of not lower than 25%. Therefore, basically effects similar to those of any one of the fourth through ninth inventive aspects can be produced. Furthermore, the relative density of the obtained forging material can be stably kept at a high value (not lower than 99%, for example) that seems to be practically preferable. That is, a sound forged member can be obtained by effectively removing the defects inside the material generated in the material molding stage.

**Claims**

1. A forging material provided as a material to be subjected to a forging process for obtaining a forged member made of a light metal,

   the forging material being manufactured by a die casting method having a plunger velocity of not smaller than 1 [m/s] or an injection molding method having a screw velocity of not smaller than 1 [m/s], and having a relative density of not lower than 90%.

2. A forging material as claimed in claim 1, wherein the forging material being molded by a semi-solid injection molding method for injecting and charging a light metal molten material in a semi-solid state into a molding cavity and having a relative density of not lower than 90%.

3. A forging material as claimed in claim 1, wherein a molten material of a magnesium alloy is used as the light metal molten material.

4. A forging material molding method for molding a forging material by a semi-solid injection molding method for injecting and charging a light metal molten material in a semi-solid state into a molding cavity of a molding die when forming the forging material provided as a material to be subjected to a forging process for obtaining a forged member made of a light metal,

   the molding method being carried out by setting a ratio Sg/Sw of a gate cross-section area Sg to a molding cavity maximum cross-section area Sw in a direction roughly perpendicular to an inflow direction of the molten material to a value of not smaller than 0.02, and setting a gate passage velocity Vg of the molten material to a value of not greater than 150 [m/s].

5. A forging material molding method as claimed in claim 4, wherein the molding is carried out by setting the gate passage velocity Vg of the molten material to a value of not greater than 100 [m/s].

6. A forging material molding method as claimed in claim 5, wherein the molding is carried out by setting the gate passage velocity Vg of the molten material to a value of not greater than 80 [m/s].

7. A forging material molding method as claimed in any one of claims 4 through 6, wherein the ratio Sg/Sw of the gate cross-section area Sg to the molding cavity maximum cross-section area Sw is set to a value of not smaller than 0.1.

8. A forging material molding method as claimed in any one of claims 4 through 7, wherein the gate passage velocity Vg of the molten material is set to a value of not greater than 80 [m/s], and the gate passage velocity Vg [mm/s], the gate cross-section area Sg [mm$^2$] and a molding cavity capacity Wv [mm$^3$] have a relation expressed by: $Vg \cdot Sg/Wv \geq 10$.

9. A forging material molding method as claimed in any one of claims 4 through 8, wherein the molding is carried out by keeping a molding die temperature at a temperature of not lower than 150°C and lower than 350°C.

10. A forging material molding apparatus for obtaining a forging material made of a light metal by injecting and charging a light metal molten material in a semi-solid state from an injection nozzle into a molding cavity of a molding die, wherein

a ratio Sg/Sw of a gate cross-section area Sg to a molding cavity maximum cross-section area Sw in a direction roughly perpendicular to an inflow direction of the molten material is set to a value of not smaller than 0.02, and a gate passage velocity Vg of the molten material is set to a value of not greater than 150 [m/s].

11. A forging material molding apparatus as claimed in claim 10, wherein the gate passage velocity Vg of the molten material is set to a value of not greater than 100 [m/s].

12. A forging material molding apparatus as claimed in claim 11, wherein the gate passage velocity Vg of the molten material is set to a value of not greater than 80 [m/s].

13. A forging material molding apparatus as claimed in any one of claims 10 through 12, wherein the ratio Sg/Sw of the gate cross-section area Sg to the molding cavity maximum cross-section area Sw is set to a value of not smaller than 0.1.

14. A forging material molding apparatus as claimed in any one of claims 10 through 13, wherein the gate passage velocity Vg of the molten material is set to a value of not greater than 80 [m/s], and the gate passage velocity Vg [mm/s], the gate cross-section area Sg [mm$^2$] and a molding cavity capacity Wv [mm$^3$] have a relation expressed by: $Vg \cdot Sg/Wv \geq 10$.

15. A forging material molding apparatus as claimed in any one of claims 10 through 14, wherein the molding die temperature is kept at a temperature of not lower than 150°C and lower than 350°C.

16. A forged member manufacturing method for forging the forging material molded by the molding method claimed in any one of claims 4 through 9 at a forging rate of not lower than 25%.

Fig. 1

## Fig.2

## Fig.3

φ90

10 7 //////// W1m

φ100

## Fig.4

φ90

18 5 //////// W1f

φ100

EP 1 040 883 A1

*Fig.5*

*Fig.6*

19

*Fig.7*

100

170

Wf3

W3

Wr3

*Fig.8*

L1

B1

A1

M1

## Fig.9

L1

B1

M1

## Fig.10

L2

A2

DIRECTION OF COMPRESSION

DIRECTION OF DEFORMATION (EXTENSION)

## Fig.11

POST-FORGING
RELATIVE
DENSITY (%)

100

98

96

94

92

90

80          90          100

PRE-FORGING RELATIVE DENSITY (%)

◆— MAXIMUM VALUE

--□-- MINIMUM VALUE

## Fig.12

RELATIVE DENSITY (%)

GATE VELOCITY (m/s)

## Fig.13

RELATIVE DENSITY (%)

Sg∕Sw

SOLID PHASE RATE : 10%
SOLID PHASE RATE : 25%

## Fig.14

Sg/Sw=0.2
vg・Sg/Wv≧10

RELATIVE DENSITY (%)

ALLOY C SOLID PHASE RATE : 40%
ALLOY C SOLID PHASE RATE : 23%

Vg (m/s)

## Fig.15

RELATIVE DENSITY (%)

SOLID PHASE RATE : 23%
vg=45

Sg/Sw

## Fig.16

## Fig.17

*Fig.18*

*Fig.19*

**European Patent Office**

**EUROPEAN SEARCH REPORT**

Application Number

EP 00 10 4480

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | PATENT ABSTRACTS OF JAPAN vol. 1999, no. 04, 30 April 1999 (1999-04-30) & JP 11 010305 A (TAKENOUCHI HIROMI), 19 January 1999 (1999-01-19) * abstract * --- | 1-3 | B22D17/00 |
| Y | US 5 800 640 A (FUJITA MAKOTO ET AL) 1 September 1998 (1998-09-01) * column 1, line 11 - line 63 * * column 3, line 62 - line 67; claims 1-3; figure 15 * | 1-3 | |
| D | & JP 06 297127 A (MAZDA MOTOR CORP) 25 October 1994 (1994-10-25) --- | | |
| X | WO 98 33610 A (AMCAN CASTINGS LIMITED) 6 August 1998 (1998-08-06) * page 14, line 17 - line 33 * --- | 1,2 | |
| A | EP 0 761 344 A (TAKATA CORP) 12 March 1997 (1997-03-12) * page 3, line 25 - line 26; claims 1-5 * --- | 1-3 | TECHNICAL FIELDS SEARCHED (Int.Cl.7) B22D B21J |
| A | GB 1 381 245 A (SANDERS ASSOCIATES INC) 22 January 1975 (1975-01-22) * page 1, line 12 - line 37 * ----- | 1 | |

The present search report has been drawn up for all claims

| Place of search | Date of completion of the search | Examiner |
|---|---|---|
| BERLIN | 20 April 2000 | Kesten, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 040 883 A1

## ANNEX TO THE EUROPEAN SEARCH REPORT
## ON EUROPEAN PATENT APPLICATION NO.

EP 00 10 4480

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2000

| Patent document cited in search report | | Publication date | Patent family member(s) | | Publication date |
|---|---|---|---|---|---|
| JP 11010305 | A | 19-01-1999 | NONE | | |
| US 5800640 | A | 01-09-1998 | JP 7188826 A | | 25-07-1995 |
| | | | US 5693158 A | | 02-12-1997 |
| | | | JP 6297127 A | | 25-10-1994 |
| WO 9833610 | A | 06-08-1998 | CA 2196479 A | | 01-08-1998 |
| | | | CA 2227828 A | | 31-07-1998 |
| | | | AU 5850098 A | | 25-08-1998 |
| EP 0761344 | A | 12-03-1997 | JP 9103859 A | | 22-04-1997 |
| | | | US 5836372 A | | 17-11-1998 |
| GB 1381245 | A | 22-01-1975 | CH 559858 A | | 14-03-1975 |
| | | | DE 2305593 A | | 13-09-1973 |
| | | | FR 2174563 A | | 12-10-1973 |
| | | | JP 939480 C | | 30-01-1979 |
| | | | JP 48100578 A | | 19-12-1973 |
| | | | JP 53012034 B | | 26-04-1978 |
| | | | SE 376788 B | | 09-06-1975 |